# EUROPÄISCHE PATENTANMELDUNG

(11) **EP 3 184 217 A1**
(43) Veröffentlichungstag der Anmeldung: **28.06.2017**
(21) Anmeldenummer: 15202115.0
(22) Anmeldetag: 22.12.2015
(51) Int. Cl.: B23B 51/04, B28D 1/04

(54) **BOHRKRONE MIT EINER VERSTEIFUNGSEINRICHTUNG**

(71) Anmelder: HILTI Aktiengesellschaft, 9494 Schaan (LI)
(72) Erfinder: Hoop, Matthaeus, 9492 Eschen (LI)
(74) Vertreter: Hilti Aktiengesellschaft Corporate Intellectual Property

(57) **Zusammenfassung**

Bohrkrone (10), die um eine Bohrachse (21) drehbar ist, aufweisend einen Schneidabschnitt (11) mit einem Ringabschnitt (16) und einem oder mehreren Schneidsegmenten (17), einen Bohrschaftabschnitt (12) mit einem zylinderförmigen Bohrschaft (18) und einen Aufnahmeabschnitt (13) mit einem Einsteckende (20) und einem Deckel (19), der eine Versteifungseinrichtung aufweist. Die Versteifungseinrichtung des Deckels (19) ist als Gitterrost ausgebildet, wobei der Gitterrost aus Tragstäben und Füllstäben aufgebaut ist

## Beschreibung

### Technisches Gebiet

Die vorliegende Erfindung betrifft eine Bohrkrone mit einer Versteifungseinrichtung gemäß dem Oberbegriff des Anspruchs 1.

### Stand der Technik

Bohrkronen bestehen aus mehreren Bohrkronenabschnitten, die als Schneidabschnitt, Bohrschaftabschnitt und Aufnahmeabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart befestigt sind. Die Schneidsegmente sind ringförmig angeordnet und bilden in einer Ebene senkrecht zur Bohrachse einen Schneidring mit einem Innendurchmesser, einem Außendurchmesser und einer Segmentbreite. Der Bohrschaftabschnitt umfasst einen zylinderförmigen Bohrschaft, der in einer Ebene senkrecht zur Bohrachse eine Ringform mit einem Innendurchmesser, einem Außendurchmesser und einer Schaftbreite aufweist. Der Aufnahmeabschnitt umfasst einen Deckel und ein Einsteckende, über das die Bohrkrone in der Werkzeugaufnahme eines Kernbohrgerätes befestigt wird.

Der Bohrschaftabschnitt ist über eine erste Verbindung mit dem Aufnahmeabschnitt und über eine zweite Verbindung mit dem Schneidabschnitt verbunden. Die erste und zweite Verbindung können als lösbare Verbindungen oder als nicht-lösbare Verbindungen ausgebildet sein. Bekannt sind Bohrkronen mit einer lösbaren ersten und einer lösbaren zweiten Verbindung, Bohrkronen mit einer lösbaren ersten und einer nicht-lösbaren zweiten Verbindung, Bohrkronen mit einer nicht-lösbaren ersten und einer lösbaren zweiten Verbindung und Bohrkronen mit einer nicht-lösbaren ersten und einer nicht-lösbaren zweiten Verbindung. Bei Bohrkronen mit einer lösbaren zweiten Verbindung sind der Ringabschnitt und der Bohrschaft lösbar verbunden, beispielsweise über kombinierte Steck- und Stiftverbindungen mit einem losen Stiftelement, wie sie in WO 2013/093060 A1 beschrieben sind, oder über kombinierte Steck- und Stiftverbindungen mit einem festen Stiftelement, wie sie in WO 2014/096360 A1 und WO2014/096366 A1 beschrieben. Bei Bohrkronen mit einer nicht-lösbaren zweiten Verbindung können der Ringabschnitt und der Bohrschaft monolithisch ausgebildet sein; alternativ kann der Ringabschnitt stoffschlüssig mit dem Bohrschaft verbunden sein.

Bohrkronen, die für Bohrlöcher mit großen Durchmessern, beispielsweise grösser 300 mm, vorgesehen sind, weisen ein hohes Gesamtgewicht auf, das bei der Verwendung mit handgeführten Kernbohrgeräten nachteilig ist. Dabei entfällt ein großer Teil des Gesamtgewichtes der Bohrkrone auf den Deckel des Aufnahmeabschnittes, der als Stahlplatte ausgebildet ist. Der Deckel hat die Aufgabe, den Bohrschaft zu versteifen und eine Verformung des Bohrschaftes zu verhindern. Bei einer Bohrkrone, die zum Nassbohren mit einer Kühl- und Spülflüssigkeit eingesetzt wird, muss der Deckel die Bohrkrone zusätzlich abschließen, um eine Fehlleitung der Kühl- und Spülflüssigkeit zu verhindern.

Um das Gewicht des Deckels für eine Bohrkrone zu reduzieren, sind verschiedene Deckel mit einer Versteifungseinrichtung bekannt. US 6,890,132 B1 offenbart einen dreiteiligen Deckel für eine Bohrkrone, der eine Außenplatte, eine Versteifungseinrichtung und eine Wasserstopplatte umfasst. Die Versteifungseinrichtung ist in Form einer speichenförmigen, ebenen Platte ausgebildet und zwischen der Wasserstopplatte und der Außenplatte angeordnet; der dreiteilige Deckel wird mit Schrauben am Bohrschaft befestigt.

US 8,790,052 B2 und US 2014/0112728 A1 offenbaren Weiterentwicklungen des aus US 6,890,132 B1 bekannten Deckels. US 8,790,052 B2 offenbart einen zweiteiligen Deckel mit einer Außenplatte und einer speichenförmigen Versteifungseinrichtung. Die Versteifungseinrichtung umfasst ein Mittelteil mit einer Mittelachse, mehrere Speichenarme mit Speichenachsen und mehrere Versteifungselemente. Die Speichenarme sind so angeordnet, dass ihre Speichenachsen die Mittelachse nicht schneiden. Die Versteifungselemente erstrecken sich senkrecht von den Speichenarmen und verlaufen in Richtung der Mittelachse. Der aus US 8,790,052 B2 bekannte Deckel mit einer Versteifungseinrichtung weist den Nachteil auf, dass die speichenförmige Versteifungseinrichtung einen hohen Fertigungsaufwand erfordert und die verfügbare Arbeitslänge der Bohrkrone reduziert wird.

### Darstellung der Erfindung

Die Aufgabe der vorliegenden Erfindung besteht darin, eine Bohrkrone dahingehend weiterzuentwickeln, dass das Gewicht der Bohrkrone ohne Verlust der Steifigkeit reduziert ist, wobei der Fertigungsaufwand möglichst gering sein soll. Dabei soll die verfügbare Arbeitslänge der Bohrkrone möglichst wenig beeinflusst werden.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass die Versteifungseinrichtung als Gitterrost ausgebildet ist, wobei der Gitterrost aus Tragstäben und Füllstäben aufgebaut ist. Ein Gitterrost ist eine Konstruktion aus Tragstäben und Füllstäben, die mit den Tragstäben verpresst, verschweißt und/oder auf andere Weise verbunden sind. Die Trag- und Füllstäbe können stabförmig oder gebogen ausgebildet sein. Die Steifigkeit eines Gitterrostes kann über mehrere Parameter angepasst werden. Dazu gehören die Breite, die Höhe und das Material der Tragstäbe, die Breite, die Höhe und das Material der Füllstäbe, der Abstand zwischen benachbarten Tragstäben und der Abstand zwischen benachbarten Füllstäben. Eine als Gitterrost ausgebildete Versteifungseinrichtung hat den Vorteil, dass Gitterroste als Standardteil kostengünstig verfügbar sind und das Gesamtgewicht einer Bohrkrone im Vergleich zu einer Bohrkrone mit einem als Stahlplatte ausgebildeten Deckel reduziert ist. Die Steifigkeit der Bohrkrone kann über die Steifigkeit des Gitterrostes an die Belastungen, der die Bohrkrone ausgesetzt ist, angepasst werden. Je höher die maximale Kraft und das maximale Drehmoment sind, umso steifer muss eine Bohrkrone ausgebildet sein.

Die erfindungsgemäße Bohrkrone umfasst einen Schneidabschnitt, der einen Ringabschnitt und ein oder mehrere Schneidsegmente aufweist, einen Bohrschaftabschnitt, der einen zylinderförmigen Bohrschaft aufweist, und einen Aufnahmeabschnitt, der ein Einsteckende und einen Deckel mit der Versteifungseinrichtung aufweist. Der Schneidabschnitt umfasst ein einzelnes Schneidsegment, das einen geschlossenen Schneidring bildet, oder mehrere Schneidsegmente, die einen Schneidring mit Zwischenräumen bilden. Der zylinderförmige Bohrschaft weist in einer Ebene senkrecht zur Bohrachse eine Querschnittsform mit einem Außendurchmesser und einem Innendurchmesser auf. Der Bohrschaft kann ringförmig oder wellen-, trapez- oder zickzackförmig ausgebildet sein. Als Innendurchmesser eines wellen-, trapez- oder zickzackförmigen Bohrschaftes ist der Durchmesser eines angrenzenden Innenkreises definiert und als Außendurchmesser eines wellen-, trapez- oder zickzackförmigen Bohrschaftes ist der Durchmesser eines angrenzenden Außenkreises definiert.

Bevorzugt umfasst der Gitterrost eine Randeinfassung. Die Randeinfassung des Gitterrostes ist mit den Tragstäben und Füllstäben verbunden und erhöht die Steifigkeit des Gitterrostes. Außerdem ermöglicht die Randeinfassung eine flächige Auflage des Gitterrostes auf dem Bohrschaft. Die Steifigkeit des Gitterrostes wird durch die Randeinfassung gegenüber einem Gitterrost ohne Randeinfassung erhöht. Die Breite, die Höhe und das Material der Randeinfassung beeinflussen die Steifigkeit des Gitterrostes.

In einer ersten bevorzugten Variante ist der Gitterrost einteilig in Form eines Vollkreises oder eines Ringes ausgebildet. Ein als Vollkreis ausgebildeter Gitterrost weist eine äußere Randeinfassung auf, die als Anlagefläche für den Gitterrost auf dem Bohrschaft dienen kann. Ein als Ring ausgebildeter Gitterrost weist neben der äußeren Randeinfassung eine innere Randeinfassung auf, die mit dem Einsteckende der Bohrkrone verbunden werden kann. Bei Bohrkronen, die zum Nassbohren mit einer Kühl- und Spülflüssigkeit vorgesehen sind, wird die Kühl- und Spülflüssigkeit über das Einsteckende zugeführt und kann über die Öffnung, die die innere Randeinfassung bildet, in das Innere der Bohrkrone transportiert werden.

In einer zweiten bevorzugten Variante ist der Gitterrost aus mehreren Gitterrostabschnitten, die einen Vollkreis oder einen Ring bilden, zusammengesetzt. Dabei besteht jeder Gitterrostabschnitt aus Tragstäben, Füllstäben und einer geschlossenen Randeinfassung. Bei einem mehrteiligen Gitterrost, der aus mehreren Gitterrostabschnitten zusammengesetzt ist, umfassen die Gitterrostabschnitte eine äußere Randeinfassung, eine innere Randeinfassung und seitliche Randeinfassungen, die für den Gitterrostabschnitt eine geschlossene Randeinfassung bilden. Die einzelnen Gitterrostabschnitte werden an den seitlichen Randeinfassungen miteinander verbunden, beispielsweise durch Schweißen, Kleben oder Verschrauben. Die Steifigkeit eines mehrteiligen Gitterrostes ist durch die zusätzlichen seitlichen Randeinfassungen gegenüber einem einteiligen Gitterrost erhöht.

Besonders bevorzugt ist der Gitterrost kreis- oder ringförmig mit einem Außendurchmesser D_{A} ausgebildet, wobei der Außendurchmesser D_{A} des Gitterrostes grösser als der Innendurchmesser d_{I} des Bohrschaftes ist. Wenn der Außendurchmesser D_{A} des Gitterrostes grösser als der Innendurchmesser d_{I} des Bohrschaftes ist, kann der Gitterrost mit der Stirnseite des Bohrschaftes verbunden werden. Die Verbindung kann beispielsweise durch Schweißen, Kleben, Verschrauben oder eine andere geeignete Verbindungsart erfolgen.

Besonders bevorzugt entspricht der Außendurchmesser D_{A} des Gitterrostes dem Außendurchmesser d_{A} des Bohrschaftes. Wenn die Außendurchmesser D_{A}, d_{A} des Gitterrostes und des Bohrschaftes übereinstimmen, kann der Deckel bzw. der Gitterrost bündig mit dem Bohrschaft verbunden werden. Bei Bohrkronen, die Durchgangsbohrungen in Werkstücken erzeugen, darf der Aufnahmeabschnitt gegenüber dem Bohrschaft nicht vorstehen.

In einer bevorzugten Ausführung weist der Deckel neben der Versteifungseinrichtung eine Abdeckung auf. Bei Bohrkronen, die ein flüssiges oder gasförmiges Medium nutzen, verschließt die Abdeckung die Bohrkrone und verhindert eine Fehlleitung des flüssigen oder gasförmigen Mediums. Beim Nassbohren mit einer Bohrkrone wird ein flüssiges Medium, das als Kühl- und Spülflüssigkeit bezeichnet wird, über einen Innenspalt zwischen dem Bohrkern und dem Bohrschaft an die Bearbeitungsstelle transportiert und mit Bohrklein versetzte Kühl- und Spülflüssigkeit über einen Außenspalt zwischen dem Bohrloch und dem Bohrschaft aus dem Bohrloch abtransportiert. Beim Trockenbohren mit einer Bohrkrone kann ein gasförmiges Medium, insbesondere Luft, genutzt werden, um Bohrklein aus dem Bohrloch abzutransportieren. Luft wird aus dem Inneren der Bohrkrone abgesaugt und führt zu einem Luftstrom, der über den Außenspalt zwischen dem Bohrloch und dem Bohrschaft in den Innenspalt zwischen dem Bohrkern und dem Bohrschaft strömt.

Besonders bevorzugt weist die Abdeckung eine untere Abdeckplatte und/oder eine obere Abdeckplatte auf. Die Abdeckung kann auf der dem Bohrschaft zugewandten und/oder abgewandten Seite des Gitterrostes angeordnet sein. Die untere Abdeckplatte ist auf der dem Bohrschaft zugewandten Seite des Gitterrostes angeordnet und die obere Abdeckplatte ist auf der dem Bohrschaft abgewandten Seite des Gitterrostes angeordnet. Bei einem Deckel mit einer unteren und oberen Abdeckplatte befindet sich der Gitterrost im Sandwich zwischen den Abdeckplatten. Durch die Sandwich-Bauweise des Deckels mit einer unteren und oberen Abdeckplatte kann die Steifigkeit des Deckels gegenüber einer unteren oder oberen Abdeckplatte, die auf einer Seite des Gitterrostes angeordnet ist, erhöht werden. Die Versteifungseinrichtung und die Abdeckung können einteilig oder mehrteilig ausgebildet sein.

Besonders bevorzugt sind die Versteifungseinrichtung und die Abdeckung einteilig ausgebildet. Die einteilige Ausbildung des Deckels mit der Versteifungseinrichtung und der Abdeckung erhöht die Steifigkeit des Deckels gegenüber einem mehrteiligen Aufbau. Außerdem lässt sich ein einteiliger Deckel einfacher am Bohrschaft befestigen, wobei das Einsteckende der Bohrkrone in den Deckel integriert ist oder als separates Einsteckende am Deckel befestigt ist.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erfindungsgemäße Bohrkrone mit einem Schneidabschnitt, einem Bohrschaftabschnitt und einem Aufnahmeabschnitt;
- FIG. 2: den Bohrschaftabschnitt und den Aufnahmeabschnitt der Bohrkrone der FIG. 1, wobei der Aufnahmeabschnitt einen Deckel mit einer Versteifungseinrichtung aufweist;
- FIG. 3: einen Querschnitt durch den Aufnahmeabschnitt entlang der Schnittlinie A-A in FIG. 2;
- FIGN. 4A-C: einen Längsschnitt durch den Aufnahmeabschnitt entlang der Schnittlinie B-B in FIG. 2 (FIG. 4A), ein erstes Detail des Aufnahmeabschnittes in einer vergrößerten Darstellung (FIG. 4B) und ein zweites Detail des Aufnahmeabschnittes in einer vergrößerten Darstellung (FIG. 4C);
- FIGN. 5A, B: eine erste alternative Ausführung der Versteifungseinrichtung (FIG. 5A), die aus vier identischen Gitterrostabschnitten (FIG. 5B) zusammengesetzt ist; und
- FIG. 6: eine zweite alternative Ausführung der Versteifungseinrichtung, die aus kreisförmigen Füllstäben und radialen Tragstäben aufgebaut ist.

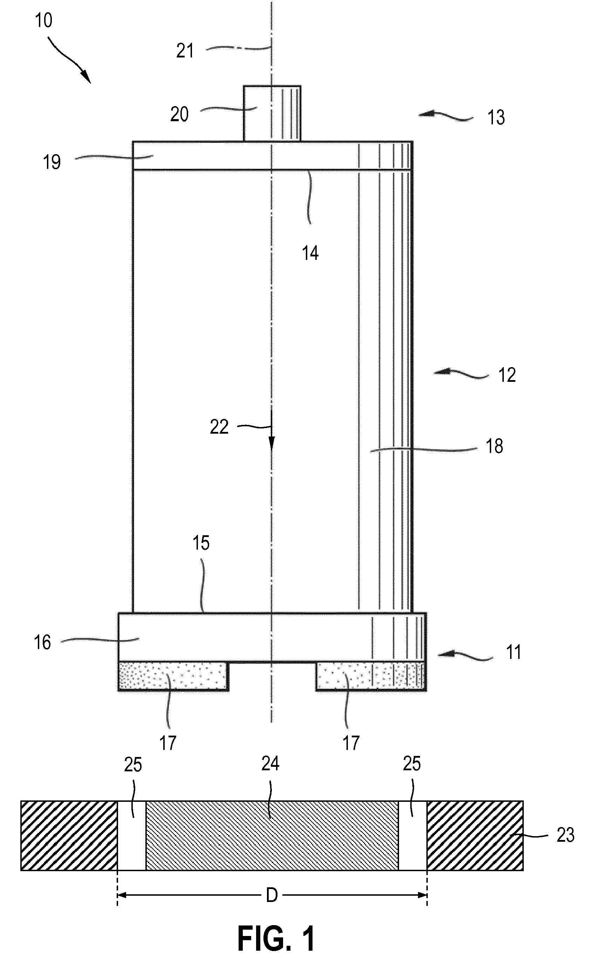

**FIG. 1** zeigt eine erfindungsgemäße Bohrkrone **10,** die einen Schneidabschnitt **11,** einen Bohrschaftabschnitt **12** und einen Aufnahmeabschnitt **13** aufweist. Der Bohrschaftabschnitt 12 ist über eine erste Verbindung **14** mit dem Aufnahmeabschnitt 13 und über eine zweite Verbindung **15** mit dem Schneidabschnitt 11 verbunden. Die erste und zweite Verbindung 14, 15 können als lösbare oder nicht-lösbare Verbindung ausgebildet sein. Eine Verbindung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung. FIG. 1 zeigt eine Bohrkrone, bei der die erste und zweite Verbindung 14, 15 als nicht-lösbare Verbindungen ausgebildet sind.

Der Schneidabschnitt 11 umfasst einen Ringabschnitt **16** und mehrere Schneidsegmente **17,** die mit dem Ringabschnitt 16 verbunden sind. Die Schneidsegmente 17 sind mit dem Ringabschnitt 16 verschweißt, verlötet, verschraubt oder in einer anderen geeigneten Befestigungsart am Ringabschnitt 16 befestigt. Der Bohrschaftabschnitt 12 umfasst einen zylinderförmigen Bohrschaft **18** mit einer Bohrschaftbreite **b.** Der Aufnahmeabschnitt 13 umfasst einen Deckel **19** und ein Einsteckende **20,** über das die Bohrkrone 10 in einer Werkzeugaufnahme eines Kernbohrgerätes befestigt wird. Im Bohrbetrieb wird die Bohrkrone 10 vom Kernbohrgerät um eine Bohrachse **21** angetrieben und in einer Bohrrichtung **22** parallel zur Bohrachse 21 in ein zu bearbeitendes Werkstück **23** bewegt. Die Bohrkrone 10 erzeugt im Werkstück 23 einen Bohrkern **24** und ein Bohrloch **25** mit einem Bohrlochdurchmesser **D.**

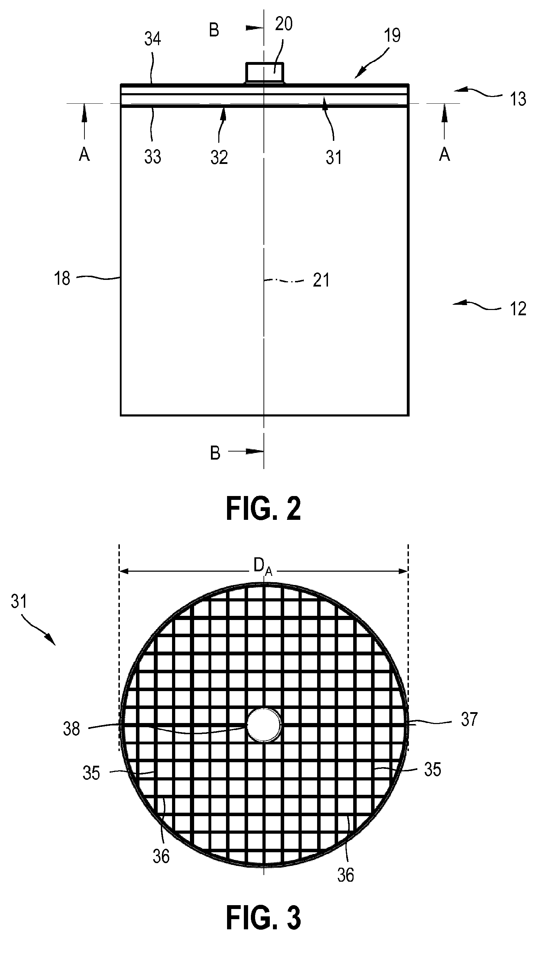

**FIG. 2** zeigt den Bohrschaftabschnitt 12 und den Aufnahmeabschnitt 13 der Bohrkrone 10 der FIG. 1. Der Aufnahmeabschnitt 13 besteht aus dem Einsteckende 20 und dem Deckel 19, wobei der Aufbau des Deckels 19 vom Einsatzgebiet der Bohrkrone 10 abhängig ist. Die Bohrkrone 10 ist zum Nassbohren mit einer Kühl- und Spülflüssigkeit geeignet. Der Deckel 19 umfasst eine als Gitterrost ausgebildete Versteifungseinrichtung **31** und eine Abdeckung **32.** Bei Bohrkronen, die ein flüssiges oder gasförmiges Medium nutzen, verschließt die Abdeckung 32 die Bohrkrone 10 und verhindert eine Fehlleitung des flüssigen oder gasförmigen Mediums. Außerdem wird die Steifigkeit des Deckels durch die Abdeckung 32 erhöht. Die Abdeckung 32 weist im Ausführungsbeispiel eine untere Abdeckplatte **33** und eine obere Abdeckplatte **34** auf.

Die wesentliche Aufgabe des Deckels 19 besteht darin, den Bohrschaft 18 zu versteifen und eine Verformung des Bohrschaftes 18 zu verhindern. Bei einer Bohrkrone 10, die zum Nassbohren mit einer Kühl- und Spülflüssigkeit eingesetzt wird, muss der Deckel 19 die Bohrkrone 10 zusätzlich über die Abdeckung 32 abschließen, um eine Fehlleitung des flüssigen oder gasförmigen Mediums zu verhindern. Bei einer Bohrkrone, die zum Trockenbohren ohne zusätzliches Medium vorgesehen ist, ist es nicht notwendig, dass der Deckel 19 die Bohrkrone 10 abschließt und die Abdeckung 32 kann entfallen oder im Hinblick auf die Steifigkeit und das Gewicht der Bohrkrone 10 optimiert werden.

**FIG. 3** zeigt einen Querschnitt durch den Aufnahmeabschnitt 13 der Bohrkrone 10 senkrecht zur Bohrachse 21 entlang der Schnittlinie A-A in FIG. 2. Die Schnittlinie A-A liegt auf Höhe der Versteifungseinrichtung 31, die als runder Gitterrost ausgebildet ist. Der Gitterrost weist einen Außendurchmesser **D_{A}** auf.

Ein Gitterrost ist eine Konstruktion aus Tragstäben und Füllstäben, die mit den Tragstäben verpresst, verschweißt und/oder auf andere Weise verbunden sind. Der Gitterrost 31 ist einteilig in Form eines Ringes ausgebildet und umfasst mehrere parallele Tragstäbe **35,** mehrere parallele Füllstäbe **36,** eine äußere Randeinfassung **37** und eine innere Randeinfassung **38.** Die Füllstäbe 36 sind unter einem Winkel zu den Tragstäben 35 angeordnet und mit den Tragstäben 35 verbunden. Der Winkel zwischen den Trag- und Füllstäben 35, 36 beträgt im Ausführungsbeispiel 90°. Alternativ können Winkel zwischen den Trag- und Füllstäben 35, 36 vorgesehen sein, die von 90° verschieden sind, beispielsweise 45°.

Die Steifigkeit des Gitterrostes 31 kann über die Breite und Höhe der Tragstäbe 35, die Breite und Höhe der Füllstäbe 36, das Material der Trag- und Füllstäbe 35, 36, den Abstand zwischen benachbarten Tragstäben 35, den Abstand zwischen benachbarten Füllstäben 36 und die Breite der äußeren und inneren Randeinfassung 37, 38 eingestellt werden.

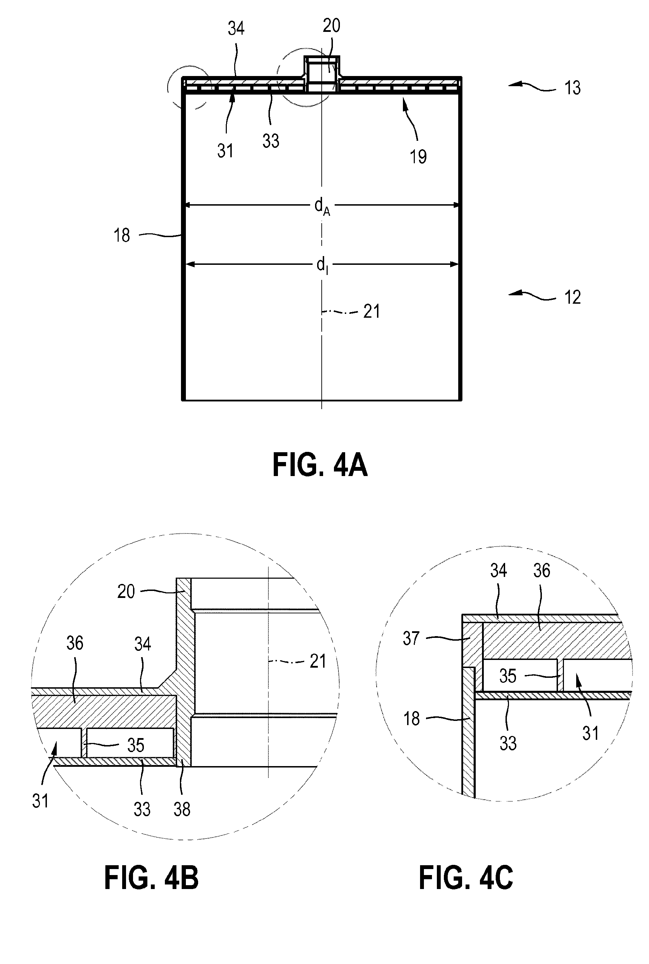

**FIGN. 4A-C** zeigen einen Längsschnitt durch den Aufnahmeabschnitt 13 der Bohrkrone entlang der Schnittlinie B-B in FIG. 2 (FIG. 4A), ein erstes Detail des Aufnahmeabschnittes 13 in einer vergrößerten Darstellung (FIG. 4B) und ein zweites Detail des Aufnahmeabschnittes 13 in einer vergrößerten Darstellung (FIG. 4C).

Der Bohrschaft 18 ist zylinderförmig ausgebildet und weist in einer Ebene senkrecht zur Bohrachse 21 eine ringförmige Querschnittform mit einem Innendurchmesser **d_{I}** und einem Außendurchmesser **d_{A}** auf. Der Gitterrost 31 ist ringförmig mit dem Außendurchmesser D_{A} ausgebildet, der dem Außendurchmesser d_{A} des Bohrschaftes 18 entspricht. An der Außenseite der Bohrkrone 10 entsteht ein bündiger Übergang zwischen dem Bohrschaft 18 und dem Deckel 19.

FIG. 4B zeigt den Übergang zwischen dem Gitterrost 31 und dem Einsteckende 20 des Aufnahmeabschnittes 13 in einer vergrößerten Darstellung und FIG. 4C zeigt den Übergang zwischen dem Bohrschaft 18 und dem Gitterrost 31 in einer vergrößerten Darstellung. Die obere Abdeckplatte 34 und das Einsteckende 20 des Aufnahmeabschnittes 13 sind im Ausführungsbeispiel einteilig ausgebildet, die untere Abdeckplatte 33 ist als separates Teil ausgebildet.

Die Abdeckung 32 umfasst die untere und obere Abdeckplatte 33, 34. Die untere Abdeckplatte 33 ist auf der dem Bohrschaft 18 zugewandten Seite des Gitterrostes 31 angeordnet und die obere Abdeckplatte 34 ist auf der dem Bohrschaft 18 abgewandten Seite des Gitterrostes 31 angeordnet. Bei einem Deckel 19 mit einer unteren und oberen Abdeckplatte 33, 34 befindet sich der Gitterrost 31 im Sandwich zwischen den Abdeckplatten 33, 34. Durch die Sandwich-Bauweise des Deckels 19 mit einer unteren und oberen Abdeckplatte 33, 34 kann die Steifigkeit des Deckels 19 gegenüber einem Deckel mit einer unteren oder oberen Abdeckplatte 33, 34, die auf einer Seite des Gitterrostes 31 angeordnet ist, erhöht werden.

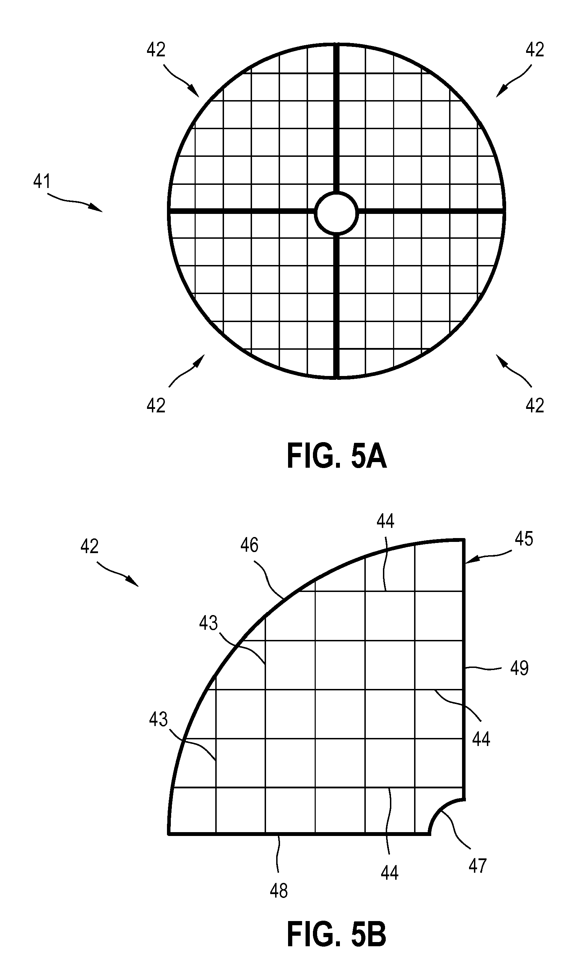

**FIGN. 5A****, B** zeigen eine erste alternative Ausführung einer Versteifungseinrichtung 41, die aus vier identischen Gitterrostabschnitten **42** zusammengesetzt ist. Die Gitterrostabschnitte 42 sind in Form eines Viertelkreises ausgebildet und an den Kanten miteinander verbunden, beispielsweise durch Schweissen, Kleben oder eine andere geeignete Verbindungsart. Die Versteifungseinrichtung 41 kann die Versteifungseinrichtung 31 der Bohrkrone 10 ersetzen.

FIG. 5B zeigt den Aufbau des Gitterrostabschnittes 42 im Detail. Der Gitterrostabschnitt 42 ist als Konstruktion aus Tragstäben **43,** Füllstäben **44** und einer Randeinfassung **45** aufgebaut. Die Randeinfassung 45 besteht aus einer äußeren Randeinfassung **46,** einer inneren Randeinfassung **47** sowie zwei seitlichen Randeinfassungen **48, 49.** Die Steifigkeit des Gitterrostes 41 kann über die Breite und Höhe der Tragstäbe 43, die Breite und Höhe der Füllstäbe 44, das Material der Trag- und Füllstäbe 43, 44, den Abstand zwischen benachbarten Tragstäben 43, den Abstand zwischen benachbarten Füllstäben 44 und die Breite, die Höhe und das Material der Randeinfassung 45 eingestellt werden.

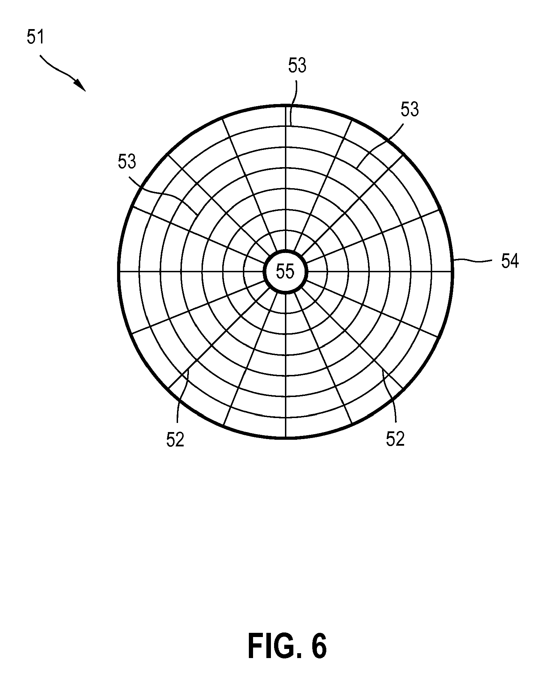

**FIG. 6** zeigt eine zweite alternative Ausführung einer Versteifungseinrichtung **51,** die einteilig als Gitterrost aus stabförmigen Tragstäben **52** und gebogenen Füllstäben **53** aufgebaut ist. Die Versteifungseinrichtung 51 ist als Konstruktion aus den Tragstäben 52, die strahlenförmig verlaufen, den Füllstäben 53, die kreisförmig ausgebildet sind, sowie einer äußeren Randeinfassung **54** und einer inneren Randeinfassung **55** aufgebaut. Die Versteifungseinrichtung 51 kann die Versteifungseinrichtung 31 der Bohrkrone 10 ersetzen. Die Steifigkeit des Gitterrostes 51 kann über die Breite und die Höhe der Tragstäbe 52, die Breite und die Höhe der Füllstäbe 53, die Anzahl der Tragstäbe 52, den Abstand der Füllstäbe 53, das Material der Trag- und Füllstäbe 52, 53 sowie die Breite, die Höhe und das Material der äußeren und inneren Randeinfassung 54, 55 eingestellt werden.

## Patentansprüche

1. Bohrkrone (10), die um eine Bohrachse (21) drehbar ist, aufweisend:
▪ einen Schneidabschnitt (11) mit einem Ringabschnitt (16) und einem oder mehreren Schneidsegmenten (17),
▪ einen Bohrschaftabschnitt (12) mit einem zylinderförmigen Bohrschaft (18), der in einer Ebene senkrecht zur Bohrachse (21) eine Querschnittsform mit einem Außendurchmesser (d_{A}) und einem Innendurchmesser (d_{I}) aufweist, und
▪ einen Aufnahmeabschnitt (13) mit einem Einsteckende (20) und einem Deckel (19), der eine Versteifungseinrichtung (31; 41; 51) aufweist,
**dadurch gekennzeichnet, dass** die Versteifungseinrichtung (31; 41; 51) als Gitterrost ausgebildet ist, wobei der Gitterrost (31; 41; 51) aus Tragstäben (35; 43; 52) und Füllstäben (36; 44; 53) aufgebaut ist.

2. Bohrkrone nach Anspruch 1, **dadurch gekennzeichnet, dass** der Gitterrost (31; 41; 51) eine Randeinfassung (37, 38; 45; 54, 55) umfasst.

3. Bohrkrone nach einem der Ansprüche 1 bis 2, **dadurch gekennzeichnet, dass** der Gitterrost (31; 51) einteilig in Form eines Vollkreises oder eines Ringes ausgebildet ist.

4. Bohrkrone nach einem der Ansprüche 1 bis 2, **dadurch gekennzeichnet, dass** der Gitterrost (41) aus mehreren Gitterrostabschnitten (42), die einen Vollkreis oder einen Ring bilden, zusammengesetzt ist.

5. Bohrkrone nach einem der Ansprüche 3 bis 4, **dadurch gekennzeichnet, dass** der Gitterrost (31; 41; 51) kreis- oder ringförmig mit einem Außendurchmesser (D_{A}) ausgebildet ist, wobei der Außendurchmesser (D_{A}) des Gitterrostes (31; 41; 51) grösser als der Innendurchmesser (d_{I}) des Bohrschaftes (18) ist.

6. Bohrkrone nach Anspruch 5, **dadurch gekennzeichnet, dass** der Außendurchmesser (D_{A}) des Gitterrostes (31; 41; 51) dem Außendurchmesser (d_{A}) des Bohrschaftes (18) entspricht.

7. Bohrkrone nach Anspruch 1, **dadurch gekennzeichnet, dass** der Deckel (19) neben der Versteifungseinrichtung (31; 41; 51) eine Abdeckung (32) aufweist.

8. Bohrkrone nach Anspruch 7, **dadurch gekennzeichnet, dass** die Abdeckung (32) eine untere Abdeckplatte (33) und/oder eine obere Abdeckplatte (34) aufweist.

9. Bohrkrone nach einem der Ansprüche 6 bis 7, **dadurch gekennzeichnet, dass** die Versteifungseinrichtung (31; 41; 51) und die Abdeckung (32) einteilig ausgebildet sind.
